# NEUE EUROPÄISCHE PATENTSCHRIFT

(11) **EP 2 236 340 B2**
(45) Veröffentlichungstag und Bekanntmachung des Hinweises auf die Entscheidung über den Einspruch: **27.12.2017**
(45) Hinweis auf die Patenterteilung: 27.08.2014
(21) Anmeldenummer: 10168759.8
(22) Anmeldetag: 08.01.2007
(51) Int. Cl.: B60K 15/03

(54) **BEHÄLTER FÜR BETRIEBSSTOFFE VON KRAFTFAHRZEUGEN**
CONTAINER FOR OPERATING MEDIA OF MOTOR VEHICLES
RÉSERVOIR POUR CARBURANTS DE VÉHICULE AUTOMOBILE

(30) Priorität: 10.01.2006 DE 102006001428; 15.11.2006 DE 102006054208
(43) Veröffentlichungstag der Anmeldung: 06.10.2010
(62) Teilanmeldung aus: 07702612.8
(73) Patentinhaber: MAGNA STEYR Fuel Systems GmbH Werk Schwäbisch Gmünd, 73529 Schwäbisch Gmünd (DE)
(72) Erfinder: Kögel, Alexander, 89077 Ulm (DE)
(74) Vertreter: Rausch, Gabriele

(56) Entgegenhaltungen:
- EP-A1- 1 350 654
- EP-A2- 1 561 626
- WO-A-91/09732
- WO-A1-94/23240
- WO-A1-2006/068616
- DE-A1- 2 335 306
- DE-A1- 10 256 727
- DE-A1- 19 841 770
- DE-A1- 19 930 347
- GB-A- 2 390 582
- US-A- 5 518 141
- US-A- 5 567 296
- US-A- 5 979 692
- US-A1- 2001 013 367
- US-A1- 2003 209 550

## Beschreibung

Die Erfindung betrifft einen Behälter für Betriebsstoffe von Kraftfahrzeugen. Derartige Behälter, insbesondere Kraftstoffbehälter, finden sich üblicherweise als Anbauteile z. B. bei Nutzfahrzeugen, wo sie oftmals als genietete oder geschweißte, alternativ als Kunststoffbehälter realisiert sind. Gerade im Nutzfahrzeugbereich entstand jedoch in den letzten Jahren - bedingt durch wachsende Anforderungen an die Umweltverträglichkeit derartiger Fahrzeuge - ein Bedarf an Behältern für Betriebsstoffe, deren Funktion über die eines konventionellen Kraftstofftanks o. ä. hinausgeht. So wurde es beispielsweise in jüngerer Zeit erforderlich, im Rahmen der Maßnahmen zur Entstickung von Dieselabgasen Harnstoff im Abgassystem von Nutzfahrzeugen einzusetzen. Damit entstand ein Bedarf an Tanks, die zum Mitführen des benötigten, chemisch aggressiven Harnstoffs geeignet sind.

Das Dokument DE 202006002035 U1 offenbart einen Behälter für Betriebsstoffe nach dem Oberbegriff des Anspruchs 1.

Der vorliegenden Erfindung liegt daher die Aufgabe zugrunde, einen Behälter für Betriebsstoffe von Kraftfahrzeugen anzugeben, der chemisch stabil sowohl gegenüber dem mitgeführten Kraftstoff als auch gegenüber Additiven ist.

Erfindungsgemäß wird diese Aufgabe durch die Merkmale des Anspruchs 1 gelöst.

Ein Vorteil dieser Anordnung besteht darin, dass aufgrund der durch die Wahl des Materials bedingten Steifigkeit der Tragstruktur diese dünn gewählt werden kann und auch die Kunststoff-Sinterschicht als Schicht von geringer Dicke ihre Funktion in ausreichendem Maße ausfüllt. Darüber hinaus ergibt sich gegenüber konventionellen Lösungen, bei denen ein fertiger Kunststoffbehälter in eine äußere stabilisierende Hülle eingebracht wird, der Vorteil, dass der Innenraum der äußeren Hülle, im vorliegenden Fall also der Tragstruktur des Behälters, wesentlich besser ausgenutzt werden kann. Insgesamt stellt der vorgeschlagene Behälter eine steife und dabei leichte Struktur dar.

Hinzu kommt, dass es die vorgeschlagene Lösung ermöglich, nahezu vollständig auf zusätzliche Vorrichtungen zur Fixierung des Kunststoffes an der Innenseite der Tragstruktur zu verzichten, da bereits durch den Sinterprozess eine feste Verbindung hergestellt wird.

Auf diese Weise können insbesondere Kraftstoffbehälter für Kraftfahrzeuge wie auch Behälter für fluide oder nicht fluide Kraft- oder Betriebsstoffe wie Hydraulikflüssigkeit, Biodiesel oder Harnstoff geschaffen werden. Ein Vorteil der Kunststoffbeschichtung der Behälterinnenseite besteht dabei darin, dass die Kunststoffschicht üblicherweise chemisch inert ist, d. h. dass sie durch den im Behälter aufbewahrten Betriebsstoff nicht angegriffen wird. Damit wird dem verbreiteten Problem des Auslösens von Metall, insbesondere von Aluminiumionen, aus der Aluminiumtragstruktur des Behälters durch den teilweise aggressiven Betriebsstoff wie insbesondere Harnstoff wirkungsvoll begegnet.

Das direkte Aufsintern der Kunststoff-Sinterschicht hat darüber hinaus erhebliche produktionstechnische Vorteile. Da die Tragstruktur selbst als Sinterwerkzeug verwendet wird, lassen sich nahezu beliebige Behälterformen auch für kleine Stückzahlen mit geringem Aufwand realisieren, so dass die erfindungsgemäßen Behälter an verschiedenste Rahmengeometrien beispielsweise für Sonderfahrzeuge auf einfache Weise angepasst werden können.

Ferner schafft die erfindungsgemäße Lösung eine einfache Möglichkeit, integrierte Mehrfach-, insbesondere Doppelbehälter zu realisieren. Die Integration der Behälter innerhalb einer Tragstruktur hat dabei den Vorteil, dass nicht jeder Teilbehälter für sich mittels zweier oder mehrerer Konsolen am Fahrzeugrahmen befestigt werden muss, sondern dass der integrierte Behälter als Ganzes mit lediglich zwei Konsolen an einem Fahrzeugrahmen angebracht werden kann.

Die Kunststoff-Sinterschicht im Inneren des Behälters ist mechanisch dadurch weiter stabilisiert, dass der Behälter an seiner Innenseite - gegebenenfalls bedingt durch den Fertigungsprozess - eine oder mehrere Hinterschneidungen aufweist. Die genannten Hinterschneidungen haben dabei den Effekt, dass sie eine zusätzliche mechanische Stabilisierung der Kunststoff-Sinterschicht bewirken, so dass ein Ablösen der Kunststoff-Sinterschicht von der Innenseite der Tragstruktur wirkungsvoll unterbunden wird. Dies führt dazu, dass die Kunststoff-Sinterschicht dünner gewählt werden kann, als es ohne Hinterschneidungen möglich wäre; im Ergebnis lässt sich auf diese Weise eine weitere Gewichtseinsparung realisieren.

Die Hinterschneidungen können insbesondere als Nebeneffekt bei der Herstellung der Struktur des Behälters realisiert werden: Bei einem aus mehreren Segmenten zusammengesetzten Behälter ergeben sich die erforderlichen Hinterschneidungen quasi automatisch an den z. B. genieteten oder auch mittels beispielsweise einer Orbitalnaht geschweißten Fügestellen. Darüber hinaus lassen sich die Hinterschneidungen auch dadurch verwirklichen, dass Durchtrittsöffnungen durch die Tragstruktur mit einer geeigneten Geometrie ausgebildet werden. Unter Durchtrittsöffnungen sind dabei insbesondere die Öffnung für den Tankstutzen oder eine Öffnung für das Einbringen eines Füllstandssensors in den Tank zu verstehen. Die Hinterschneidung wird auf erfindungsgemäße Weise durch einen sich in Richtung des Innenraumes des Behälters konisch erweiternden Stutzen vorzusehen, wodurch ein Abziehen der Kunststoff-Sinterschicht nach innen ebenfalls wirksam erschwert wird gebildet.

Eine weitere Maßnahme zur Verbesserung der Haftung zwischen Kunststoff-Sinterschicht und der Innenseite der Tragstruktur kann insbesondere dadurch erreicht werden, dass zwischen die Kunststoff-Sinterschicht und die Innenseite der Tragstruktur eine zusätzliche Haftschicht eingebracht wird. Auf diese Weise kann die zur mechanischen Stabilität der Kunststoff-Sinterschicht notwendige Schichtdicke weiter reduziert werden.

Eine vorteilhafte Wahl für die Kunststoff-Sinterschicht besteht in einem Hochdruck-Polyäthylen, das die erforderliche chemische Inertheit gegenüber den mitzuführenden Betriebsstoffen aufweist; als Dicke der Sinterschicht haben sich ca. 1-25 mm, insbesondere ca. 2 bis 3 mm bzw. 5 bis 10 mm bewährt.

Um eine gleichmäßige Verteilung des Kunststoff-Sintermaterials im Innenraum des Behälters zu erreichen, kann der Behälter während des Sinterprozesses in Bewegung, insbesondere in Rotation gehalten werden.

Als Zwischenschritt nach dem Erhitzen der Tragstruktur und vor Einbringen des Kunststoff-Sintermaterials hat es sich bewährt, eine zusätzliche Haftschicht auf die Innenseite der Tragstruktur aufzubringen. Alternativ kann die Haftschicht auch bereits auf die Einzelsegmente vor dem Zusammenfügen der Tragstruktur aufgebracht werden. Ebenso ist es denkbar, z. B. bei genieteten Behältern, auch die Kunststoff-Sinterschicht bereits vor dem Zusammenfügen der Tragstruktur aufzubringen; d. h. im wesentlichen, in dem vorstehend genannten Verfahren den ersten Schritt, nämlich das Zusammenfügen der Einzelsegmente, an das Ende des Prozesses zu verlegen. Insbesondere bei genieteten Tragstrukturen bietet sich diese Vorgehensweise an, da in diesem Fall die bereits beschichtete Struktur nicht noch einmal erhitzt werden muss, wie es beispielsweise bei einem Zusammenfügen des Behälters durch Schweißen der Fall wäre.

In den Fällen, in denen die Kunststoff-Sinterschicht nach Zusammenfügen der Tragstruktur in den Behälter eingebracht wird, empfiehlt es sich, das Kunststoffmaterial durch eine ohnehin vorgesehene Öffnung der Tragstruktur, wie beispielsweise den Einfüllstutzen, einzubringen. Es ist ebenso denkbar, das Kunststoffmaterial durch eine weitere Öffnung in den Innenraum des Behälters einzubringen.

Als vorteilhafter Temperaturbereich zum Aufsintern der Kunststoff-Sinterschicht hat sich der Bereich von ca. 160 bis 200 °C bewährt.

In einer weiteren vorteilhaften Ausführungsform der Erfindung weist der Behälter einen ersten Teilbehälter auf, dessen Innenseite mindestens teilweise mit einer Kunststoff-Sinterschicht bedeckt ist. An diesen ersten Teilbehälter schließt sich mindestens ein zweiter Teilbehälter an, der gegenüber dem ersten Teilbehälter abgeschlossen ausgebildet ist. Die beiden Teilbehälter sind mittels einer Schweißnaht mit einander verbunden, wobei die Schweißnaht entlang einer Auskragung an dem ersten Teilbehälter in einem Abstand von mindestens 100mm, insbesondere mindestens 200mm verläuft.

Dabei kann es sich bei dem ersten Teilbehälter insbesondere um einen Harnstoffbehälter handeln, der an den als Kraftstoffbehälter ausgebildeten zweiten Teilbehälter angeschweißt ist. Die oben genannte Auskragung des ersten Teilbehälters hat dabei die Wirkung, dass die Schweißnaht, mittels derer die beiden Behälter mit einander verbunden werden, von dem innenbeschichteten ersten Teilbehälter einen hinreichend großen Abstand aufweißt, um ein Aufschmelzen und damit eine Schädigung der Kunststoff-Sinterschicht im Inneren des ersten Teilbehälters während des Schweißvorganges zu vermeiden. Für eine Ausführung der beiden Behälter aus Aluminium mit ca. 2 mm Wandstärke hat sich ein Abstand der Schweißnaht von ca. 150 mm von dem ersten Teilbehälter als vorteilhaft erwiesen; abhängig von der verwendeten Schweißtechnologie sind Abstände von 0 bis 3000, insbesondere von 0 bis 1000 mm denkbar.

Der Behälter kann ferner ein Einschubelement aufweisen, das sich durch die Tragstruktur hindurch in den Innenraum des Behälters erstreckt, wobei das Einschubelement mindestens teilweise von der Kunststoff-Sinterschicht bedeckt ist. Bei dem Einschubelement kann es sich beispielsweise um einen kapazitiven oder mechanischen Füllstandssensor, ein Heizelement oder ein kombiniertes Element aus Füllstandssensor und Heizelement handeln. Ein derartiges Einschubelement kann insbesondere zur Beheizung eines als Harnstoffbehälters ausgebildeten ersten Teilbehälters verwendet werden. Die Heizung kann dabei als elektrische Widerstandsheizung oder auch als Kühlwasserheizung realisiert werden.

Eine Problematik der Verwendung eines Einschubelementes in Harnstoffbehältern besteht darin, dass derartige Einschubelemente in den Fällen, in denen sich bei niedrigen Temperaturen des Harnstoffes feste Kristalle bilden, erhebliche mechanische Belastungen des Einschubelementes auftreten, die zu einer Verbiegung oder im Extremfall zu einer Zerstörung des Einschubelementes führen. Dieser Gefahr kann dadurch wirksam begegnet werden, dass im Bereich des dem Innenraum des Behälters zugewandten Endes des Einschubelementes, insbesondere in einem Abstand von ca. 5-10 mm von dem Einschubelement, eine Hilfsstruktur angeordnet ist, durch die einer Positionsveränderung oder einer Verformung des Einschubelementes entgegengewirkt wird.

Der genannte Abstand der Hilfsstruktur von dem Einschubelement führt dazu, dass bei dem im normalen Fahrbetrieb auftretenden Schwingungen kein Schlagen des Einschubelementes an der Hilfsstruktur auftritt; die Hilfsstruktur unterbindet lediglich zu große Deformationen oder Positionsveränderungen des Einschubelementes.

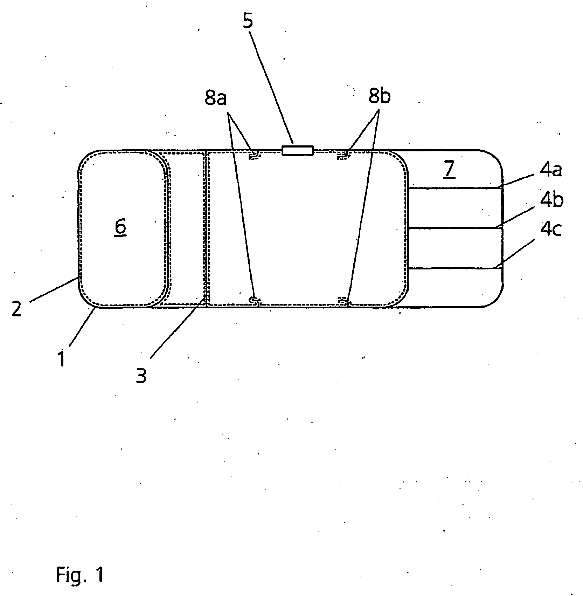

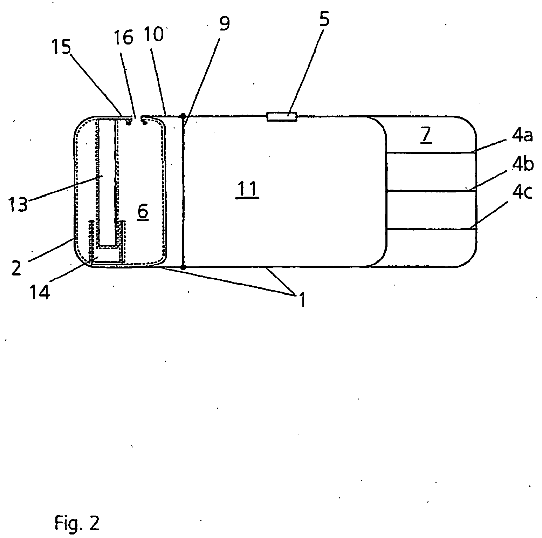

Nachfolgend wird ein Ausführungsbeispiel der Erfindung anhand der Figuren 1 und 2 prinzipmäßig beschrieben.

Fig. 1 zeigt einen Kraftstoffbehälter für Nutzfahrzeuge mit einer Tragstruktur 1 und einer auf der Innenseite der Tragstruktur 1 aufgebrachten Kunststoff-Sinterschicht 2 sowie einem Einfüllstutzen 5. Die Kunststoff-Sinterschicht 2 weist dabei eine Dicke von ca. 2 bis 3 mm auf. Sie bedeckt im vorliegenden Ausführungsbeispiel die gesamte Innenoberfläche des Fahrzeugtanks, insbesondere auch die Oberfläche der Schwallwand 3 und des als separaten Behälter ausgebildeten Harnstoffbehälters 6.

Durch die umlaufenden Hinterschneidungen 8a und 8b, die ebenfalls von der Kunststoff-Sinterschicht 2 bedeckt sind, wird diese zusätzlich mechanisch stabilisiert und an der Innenseite der Tragstruktur 1 festgehalten. In einem zusätzlichen Segment 7 des Kraftstoffbehälters sind die Trittstufen 4a, 4b, 4c ausgebildet.

Figur 2 zeigt eine Variante eines Behälters, wobei der Behälter die beiden Teilbehälter 6 und 11 aufweist, die miteinander mittels der umlaufenden Schweißnaht 9 verbunden sind. Dabei handelt es sich bei dem Teilbehälter 6 um einen Harnstoffbehälter mit einer Kunststoff-Sinterschicht 2. Bei dem Teilbehälter 11 handelt es sich um einen Kraftstoffbehälter, bei dem ein Kunststoff-Innenbeschichtung nicht erforderlich ist. Der Teilbehälter 11 weist ferner einen Einfüllstutzen 5 auf. Die umlaufende Schweißnaht 9 ist von dem innenbeschichteten Teilbehälter 6 mittels der Auskragung 10 um ca. 150 mm beabstandet ausgebildet, so dass ein Verschweißen der Tragstrukturen 1 der beiden Teilbehälter 6 und 11 ohne Gefährdung der Kunststoff-Sinterschicht 2 erfolgen kann. Auf diese Weise wird die Produktion des erfindungsgemäßen Behälters wesentlich vereinfacht.

Auch in diesem Ausführungsbeispiel sind in einem zusätzlichen Segment 7 des Teilbehälters 11 die Trittstufen 4a, 4b, 4c ausgebildet.

In dem Teilbehälter 6 ist das in der Figur 2 schematisch dargestellte Einschubelement 13 angeordnet, das als Füllstandssensor mit einem integriertem Heizelement ausgebildet ist. Auch das Einschubelement 13 ist - wie auch die Innenseite des Teilbehälters 6 - von der Kunststoff-Sinterschicht 2 bedeckt. Darüber hinaus wird das Einschubelement 13 von der im unteren Bereich des Teilbehälters 6 angeordneten ebenfalls mit der Kunststoff-Sinterschicht 2 bedeckten Hilfsstruktur 14 mechanisch in der Weise stabilisiert, dass die Hilfsstruktur 14 in einem Abstand von wenigen Millimetern von dem Einschubelement 13 angeordnet ist und eine starke Verbiegung oder Positionsänderung des Einschubelementes 13 unterbindet.

Ferner befindet sich im oberen Bereich des Teilbehälters 6 die Durchtrittsöffnung 16, die von dem Einfüllstutzen 15 durchstoßen wird. Die Geometrie des Einfüllstutzens 15 ist dabei so gewählt, dass sich der Einfüllstutzen 15 in Richtung des Inneren des Teilbehälters 6 erweitert. Auf diese Weise wird eine Hinterschneidung geschaffen, durch die der Halt der Kunststoff-Sinterschicht 2 an der Innenseite des Teilbehälters 6 weiter verbessert wird.

## Patentansprüche

1. Behälter für Betriebsstoffe von Kraftfahrzeugen, wobei der Behälter eine Tragstruktur (1) aus Aluminium aufweist und die Innenseite der Tragstruktur mindestens teilweise mit einer Kunststoff-Sinterschicht (2) bedeckt ist, und die Innenseite des Behälters mindestens eine Hinterschneidung (8a,b) aufweist, durch welche ein Ablösen der Kunststoff-Sinterschicht (2) von der Tragstruktur (1) erschwert wird, **dadurch gekennzeichnet, dass** die Hinterschneidung durch einen sich in Richtung des Innenraumes des Behälters konisch erweiternden Stutzen gebildet ist.

2. Behälter nach Anspruch 1, **dadurch gekennzeichnet, dass** es sich bei dem Behälter um einen Kraftstoffbehälter handelt.

3. Behälter nach Anspruch 1, **dadurch gekennzeichnet, dass** es sich bei dem Behälter um einen Harnstoffbehälter (6) handelt.

4. Behälter nach Anspruch 1, **dadurch gekennzeichnet, dass** die mindestens eine Hinterschneidung im Bereich einer Durchtrittsöffnung (15) in der Tragstruktur (1) angeordnet ist.

5. Behälter nach einem der vorangehenden Ansprüche, **dadurch gekennzeichnet, dass** der Behälter aus mehreren Segmenten zusammengesetzt ist.

6. Behälter nach einem der vorangehenden Ansprüche, **dadurch gekennzeichnet**, das zwischen der Kunststoff-Sinterschicht (2) und der Tragstruktur (1) mindestens bereichsweise eine zusätzliche Haftschicht angeordnet ist.

7. Behälter nach einem der vorangehenden Ansprüche, **dadurch gekennzeichnet, dass** die Kunststoff-Sinterschicht (2) aus einem Hochdruck-Polyethylen besteht.

8. Behälter nach einem der vorangehenden Ansprüche, **dadurch gekennzeichnet, dass** die Kunststoff-Sinterschicht (2) eine Dicke von 1 bis 25 mm, insbesondere von circa 5 bis 10 mm aufweist.

9. Behälter nach einem der vorangehenden Ansprüche, **dadurch gekennzeichnet, dass** der Behälter ein Einschubelement (13) aufweist, das sich durch die Tragstruktur (1) hindurch in den Innenraum des Behälters erstreckt, wobei das Einschubelement (13) mindestens teilweise von der Kunststoff-Sinterschicht (2) bedeckt ist.

10. Behälter nach Anspruch 9, **dadurch gekennzeichnet, dass** es sich bei dem Einschubelement (13) um einen Füllstandssensor handelt.

11. Behälter nach Anspruch 9 oder 10, **dadurch gekennzeichnet, dass** das Einschubelement (13) ein Heizelement aufweist.

12. Behälter nach einem der vorangehenden Ansprüche 9-11, **dadurch gekennzeichnet, dass** im Bereich des dem Innenraum des Behälters zugewandten Endes des Einschubelementes (13), insbesondere in einem Abstand von ca. 5 bis 10 mm von dem Einschubelement (13), eine Hilfsstruktur (14) angeordnet ist, durch die einer Positionsveränderüng oder einer Verformung des Einschubelementes (13) entgegen gewirkt wird.

## Claims

1. Container for operating media of motor vehicles, wherein the container has a carrying structure (1) made of aluminium and the inside of the carrying structure is covered at least partially with a plastic sintered layer (2), and the inside of the container has at least one undercut (8a, b) which makes it more difficult for the plastic sintered layer (2) to become detached from the carrying structure (1), **characterized in that** the undercut is formed by a neck which widens conically in the direction of the interior of the container.

2. Container according to Claim 1, **characterized in that** the container is a fuel container.

3. Container according to Claim 1, **characterized in that** the container is a urea container (6).

4. Container according to Claim 1, **characterized in that** the at least one undercut is arranged in the region of a passage orifice (15) in the carrying structure (1).

5. Container according to one of the preceding claims, **characterized in that** the container is composed of a plurality of segments.

6. Container according to one of the preceding claims, **characterized in that** an additional adhesive layer is arranged at least in regions between the plastic sintered layer (2) and the carrying structure (1).

7. Container according to one of the preceding claims, **characterized in that** the plastic sintered layer (2) consists of a high-pressure polyethylene.

8. Container according to one of the preceding claims, **characterized in that** the plastic sintered layer (2) has a thickness of 1 to 25 mm, in particular of approximately 5 to 10 mm.

9. Container according to one of the preceding claims, **characterized in that** the container has a push-in element (13) which extends through the carrying structure (1) into the interior of the container, wherein the push-in element (13) is covered at least partially by the plastic sintered layer (2).

10. Container according to Claim 9, **characterized in that** the push-in element (13) is a filling level sensor.

11. Container according to Claim 9 or 10, **characterized in that** the push-in element (13) has a heating element.

12. Container according to one of the preceding Claims 9-11, **characterized in that**, in the region of that end of the push-in element (13) facing the interior of the container, in particular at a spacing approximately 5 to 10 mm from the push-in element (13), an auxiliary structure (14) is arranged, by means of which a variation in position or a deformation of the push-in element (13) is counteracted.

## Revendications

1. Réservoir pour carburants de véhicules automobiles, le réservoir présentant une structure porteuse (1) d'aluminium et le côté interne de la structure porteuse étant au moins en partie revêtu d'une couche de plastique fritté (2), et le côté interne du réservoir présentant au moins une contre-dépouille (8a, b) qui rend plus difficile un décollement de la couche de plastique fritté (2) de la structure porteuse (1), **caractérisé en ce que** la contre-dépouille est formée par une tubulure s'élargissant coniquement dans la direction de l'espace interne du réservoir.

2. Réservoir selon la revendication 1,
**caractérisé en ce que**
le réservoir est un réservoir de carburant.

3. Réservoir selon la revendication 1,
**caractérisé en ce que**
le réservoir est un réservoir d'urée (6).

4. Réservoir selon la revendication 1,
**caractérisé en ce que**
l'au moins une contre-dépouille est disposée dans la région d'une ouverture de passage (15) dans la structure porteuse (1).

5. Réservoir selon l'une quelconque des revendications précédentes,
**caractérisé en ce que**
le réservoir se compose de plusieurs segments.

6. Réservoir selon l'une quelconque des revendications précédentes,
**caractérisé en ce**
**qu'**entre la couche de plastique fritté (2) et la structure porteuse (1) est disposée au moins en partie une couche adhésive supplémentaire.

7. Réservoir selon l'une quelconque des revendications précédentes,
**caractérisé en ce que**
la couche de plastique fritté (2) se compose de polyéthylène haute pression.

8. Réservoir selon l'une quelconque des revendications précédentes,
**caractérisé en ce que**
la couche de plastique fritté (2) présente une épaisseur de 1 à 25 mm, en particulier d'environ 5 à 10 mm.

9. Réservoir selon l'une quelconque des revendications précédentes,
**caractérisé en ce que**
le réservoir présente un élément d'insertion (13) qui s'étend à travers la structure porteuse (1) dans l'espace interne du réservoir, l'élément d'insertion (13) étant recouvert au moins en partie de la couche de plastique fritté (2).

10. Réservoir selon la revendication 9,
**caractérisé en ce que**
l'élément d'insertion (13) est un capteur de niveau de remplissage.

11. Réservoir selon la revendication 9 ou 10,
**caractérisé en ce que**
l'élément d'insertion (13) présente un élément chauffant.

12. Réservoir selon l'une quelconque des revendications 9 à 11,
**caractérisé en ce**
**qu'**une structure auxiliaire (14) est disposée dans la région de l'extrémité de l'élément d'insertion (13) tournée vers l'espace interne du réservoir, en particulier à une distance d'environ 5 à 10 mm de l'élément d'insertion (13), laquelle s'oppose à une variation de position ou à une déformation de l'élément d'insertion (13).
